# EUROPÄISCHE PATENTSCHRIFT

(11) **EP 3 117 628 B1**
(45) Veröffentlichungstag und Bekanntmachung des Hinweises auf die Patenterteilung: **06.05.2020**
(21) Anmeldenummer: 14824786.9
(22) Anmeldetag: 03.12.2014
(51) Int. Cl.: H04Q 9/00, E05F 15/668

(54) **ÜBERWACHUNGS- UND ANSTEUERVORRICHTUNG FÜR EINE TOREINHEIT**
MONITORING AND ACTUATING DEVICE FOR A DOOR UNIT
INSTALLATION DE SURVEILLANCE ET DE COMMANDE POUR UNE UNITÉ DE PORTE

(30) Priorität: 13.03.2014 DE 102014103456
(43) Veröffentlichungstag der Anmeldung: 18.01.2017
(73) Patentinhaber: Fraba B.V., 6416 SG Heerlen (NL)
(72) Erfinder: BECKEN, Martin, 41719 Viersen (DE); KAGERER, Bernd, 47809 Krefeld (DE)
(74) Vertreter: terpatent Patentanwälte ter Smitten Eberlein-Van Hoof Rütten Daubert
(86) Internationale Anmeldenummer: PCT/EP2014/076432
(87) Internationale Veröffentlichungsnummer: WO 2015/135607

(56) Entgegenhaltungen:
- BE-A3- 1 020 066
- US-A1- 2010 297 941
- US-A1- 2012 239 773

## Beschreibung

Die Erfindung betrifft eine Überwachungs- und Ansteuervorrichtung für ein Tororgan, wie zum Beispiel ein Roll- oder Sektionaltor, das durch eine Antriebsvorrichtung bewegbar ist, wobei die Ansteuervorrichtung Elektronikbauteile enthält, die eine Antriebssteuereinheit, mindestens eine Sensoranordnung, die im Bereich der Toreinheit angeordnet ist, und mindestens ein Bedienelement aufweisen, wobei ein Funknetzwerk nach dem Master/Slave-Funktionsprinzip zur drahtlosen Kommunikation der Elektronikbauteile vorgesehen ist, wobei eines der Elektronikbauteile als Masterorgan im Funknetzwerk vorgesehen ist, wobei das Masterorgan die Kommunikation initiiert und/oder aufrecht erhält, wobei Steuerungsfunktionen auf mehrere Elektronikbauteile verteilt sind.

Derartige Vorrichtungen sind aus dem Stand der Technik hinlänglich bekannt. Ein Beispiel hierfür findet sich in der BE 1 020 066 A3. Aus der US 2012/239773 ist es darüber hinaus bekannt, ein internetfähiges Masterorgan bei Tororganen vorzusehen. Insbesondere eine den Sicherheitsbestimmungen genügende Ansteuerung sowie die regelmäßige Wartung und Überwachung der sicherheitsrelevanten Funktionen erfordert einen hohen Aufwand.
Aufgabe der Erfindung ist es daher, eine gattungsgemäße Überwachungs- und Ansteuervorrichtung bereit zu stellen, die den oben genannten Aufwand auf einfache und kostengünstige Weise minimiert.

Diese Aufgabe wird dadurch gelöst, dass die Masterfunktion erst während eines Startes der Ansteuervorrichtung festlegbar oder bestimmbar ist. Hierdurch ist eine dezentrale Anordnung von Steuerungsfunktionen möglich. Der Vorteil einer solchen dezentralen Anordnung liegt in dem flexiblen Aufbau und Steuerungskonzept. Eine dedizierte Steuereinheit kann entfallen. Hierbei kann es besonders vorteilhaft sein, wenn die Festlegung der Masterfunktion auch während eines Betriebes änderbar ist.

Dadurch, dass die Elektronikbauteile ein internetfähiges und/oder mobilfunkfähiges Kommunikationselement aufweisen, kann über externe Geräte und/oder ein Heimnetzwerk eine Verbindung zum Internet geschaffen werden, welche es ermöglicht, Informationen und Steuerbefehle auch über das Internet zu übermitteln. Das Kommunikationselement kann in vorteilhafter Weise ein Smartphone sein.

Dadurch, dass eine stationäre Überwachungseinheit, beispielsweise ein extern angeordneter Rechner, vorgesehen ist, die mit dem Kommunikationselement wirkverbunden ist, kann über das Netzwerk auf einfache Weise auf die Überwachungs- und Ansteuervorrichtung zwecks Fehlersuche oder auch Funktionsprüfungen zugegriffen werden.

In vorteilhafter Weise sind über das Kommunikationselement Steuerungsparameter einstellbar, wobei auch über das Kommunikationselement Status- und/oder Wartungsinformationen abrufbar sein können.

Auch ist es vorteilhaft, dass die Elektronikbauteile ein Displayorgan aufweisen.

Als bevorzugte Funknetzwerke können ein Bluetooth- oder Wlan-Netzwerk dienen.

Die Erfindung wird anhand einer schematischen Ansicht nachfolgend näher erläutert.

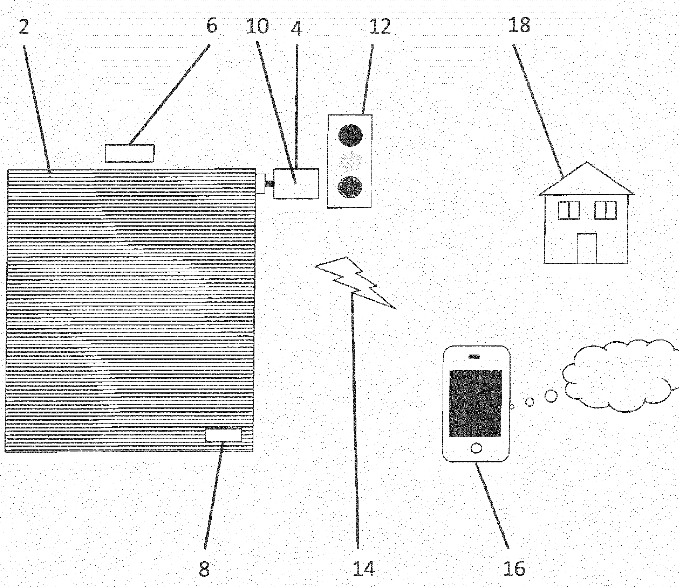

Die einzige Figur zeigt ein als Rolltor 2 ausgeführtes Tororgan, dass durch eine Antriebsvorrichtung 4 bewegbar ist. Um eine sichere und steuerungstechnisch exakte Funktion des Rolltores 2 zu gewährleisten, sind auf bekannte Weise verschiedene Elektronikbauteile, wie eine Überwachungssensor 6, ein Sicherheitssensor 8, eine Antriebssteuereinheit 10, die in der Antriebsvorrichtung 4 angeordnet ist sowie eine Displayvorrichtung 12 zur Anzeige von Statussymbolen vorgesehen. Alle Elektronikbauteile kommunizieren im vorliegenden Fall in einem Bluetooth-Funknetzwerk 14 miteinander, wobei der Überwachungssensor 6 als Masterorgan dient. Als Masterorgan wird ein Elektronikbauteil verstanden, das die Kommunikation initiiert und/oder aufrecht erhält. Darüberhinaus kann das Masterorgan in vorteilhafter Weise Statusmeldungen oder Befehle empfangen, interpretieren und dem Slaveorgan entsprechend weiterleiten. Das heißt nicht, dass alle Steuerungsfunktionen nur durch ein Elektronikbauteil wahrgenommen werden. Es kann vielmehr vorteilhaft sein, diese Steuerungsfunktionen auf mehrere Elektronikbauteile zu verteilen. Auch ist es denkbar, dass die Masterfunktion erst während eines Startes der Ansteuervorrichtung festgelegt oder bestimmt wird und sich diese Zuordnung auch während des Betriebs ändern kann. Über ein Smartphone 16, das hier als internetfähiges und mobilfunkfähiges Kommunikationselement dient, können nun Daten beispielsweise an einen stationären Rechner 18 geschickt werden und damit Steuerungs- und oder Überwachungsfunktionen wahrgenommen werden. Es ist jedoch auch möglich, dass beispielsweise am Rolltor 2 ein Wlan-fähiger Router angeordnet ist.

Es sollte deutlich sein, dass Sensororgane alternativ in der Antriebsvorrichtung und/oder Antriebssteuereinheit und/oder Bedienelement anschlusstechnisch untergebracht sein können und daher nicht über einen eigenen Funkzugang verfügen müssen.

## Patentansprüche

1. Überwachungs- und Ansteuervorrichtung für ein Tororgan (2), wie zum Beispiel ein Roll- oder Sektionaltor, das durch eine Antriebsvorrichtung (4) bewegbar ist, wobei die Ansteuervorrichtung Elektronikbauteile (6,8,10,12) enthält, die eine Antriebssteuereinheit (10), mindestens ein Sensoranordnung (6, 8), die im Bereich der Tororgans (2) angeordnet ist, und mindestens ein Bedienelement (12) aufweisen, wobei ein Funknetzwerk (14) nach dem Master/Slave-Funktionsprinzip zur drahtlosen Kommunikation der Elektronikbauteile (6, 8) vorgesehen ist, wobei eines der Elektronikbauteile (6,8,10,12) als Masterorgan im Funknetzwerk vorgesehen ist, wobei das Masterorgan als Masterfunktion die Kommunikation initiiert und/oder aufrecht erhält, wobei Steuerungsfunktionen auf mehrere Elektronikbauteile (6, 8) verteilt sind, **dadurch gekennzeichnet, dass** die Masterfunktion erst während eines Startes der Ansteuervorrichtung festlegbar oder bestimmbar ist.

2. Überwachungs- und Ansteuervorrichtung nach Anspruch 1, **dadurch gekennzeichnet, dass** die Festlegung der Masterfunktion auch während eines Betriebes des Tororgans (2) änderbar ist.

3. Überwachungs- und Ansteuervorrichtung nach Anspruch 1 oder 2, **dadurch gekennzeichnet, dass** die Elektronikbauteile (6, 8) ein internetfähiges und/oder mobilfunkfähiges Kommunikationselement (16) aufweisen.

4. Überwachungs- und Ansteuervorrichtung nach Anspruch 3, **dadurch gekennzeichnet, dass** das Kommunikationselement ein Smartphone (16) ist.

5. Überwachungs- und Ansteuervorrichtung nach Anspruch 3 oder 4, **dadurch gekennzeichnet, dass** eine stationäre Überwachungseinheit vorgesehen ist, die mit dem Kommunikationselement (16) wirkverbunden ist.

6. Überwachungs- und Ansteuervorrichtung nach einem der Ansprüche 3 - 5, **dadurch gekennzeichnet, dass** über das Kommunikationselement (16) Steuerungsparameter einstellbar sind.

7. Überwachungs- und Ansteuervorrichtung nach einem der Ansprüche 3 - 6, **dadurch gekennzeichnet, dass** über das Kommunikationselement (16) Status- und/oder Wartungsinformationen abrufbar sind.

8. Überwachungs- und Ansteuervorrichtung nach einem der vorhergehenden Ansprüche, **dadurch gekennzeichnet, dass** die Elektronikbauteile ein Displayorgan (12) aufweisen.

9. Überwachungs- und Ansteuervorrichtung nach einem der vorhergehenden Ansprüche, **dadurch gekennzeichnet, dass** als Funknetzwerk ein Bluetooth-Netzwerk (14) dient.

10. Überwachungs- und Ansteuervorrichtung nach einem der Ansprüche 1 - 5, **dadurch gekennzeichnet, dass** als Funknetzwerk ein Wlan-Netzwerk dient.

## Claims

1. Monitoring and control device for a door unit (2), such as a rolling gate or a sectional gate, movable by means of a drive device (4), the control device including electronic components (6, 8, 10, 12) which comprise a drive control unit (10), at least one sensor arrangement (6, 8) arranged in the vicinity of the gate unit (2), and at least one operating element (12), wherein a radio network (14) operates according to the master/slave functional principle being provided for wireless communication of the electronic components (6, 8), wherein one of the electronic components (6, 8, 10, 12) is provided as a master device in the radio network, wherein the master device initiates and/or maintains communication as the master function, wherein control functions are distributed among a plurality of electronic components (6, 8), **characterized in that** the master function can be defined or determined only during a start of the control device.

2. Monitoring and control device according to claim 1, **characterized in that** the definition of the master function can also be changed during operation of the gate unit (2).

3. Monitoring and control device according to claim 1 or 2, **characterized in that** the electronic components (6, 8) comprise a web-enabled and/or mobile radio-enabled communication element (16).

4. Monitoring and control device according to claim 3, **characterized in that** the communication element is a smartphone.

5. Monitoring and control device according to claim 3 or 4, **characterized in that** a stationary monitoring unit is provided which is operatively connected with the communication element (16).

6. Monitoring and control device according to one of claims 3 - 5, **characterized in that** control parameters can be set via the communication element (16).

7. Monitoring and control device according to one of claims 3 - 6, **characterized in that** status and/or maintenance information can be retrieved via the communication element.

8. Monitoring and control device according to one of the preceding claims, **characterized in that** the electronic components comprise a display element (12).

9. Monitoring and control device according to one of the preceding claims, **characterized in that** a Bluetooth network (14) is used as the radio network.

10. Monitoring and control device according to one of claims 1-5, **characterized in that** a wireless local area network is used as the radio network.

## Revendications

1. Dispositif de surveillance et de commande pour une unité de porte (2), tel qu'une porte roulante ou sectionnelle, mobile à l'aide d'un dispositif d'entrainement (4), dans lequel le dispositif de commande comprend des composants électroniques (6, 8, 10, 12) incluant une unité de commande d'entrainement (10), au moins un ensemble capteur (6, 8) disposé dans la région de l'unité de porte (2), et au moins un élément d'opération (12), dans lequel un réseau radio (14) selon le principe de fonctionnement maitre/esclave est prévu pour la communication sans fil des composants électroniques (6, 8), dans lequel un des composants électroniques (6, 8, 10, 12) étant prévu dans le réseau radio comme élément maitre, dans lequel, comme fonction maitre, l'élément maitre initialise et/ou maintient la communication, dans lequel des fonctions de commande sont reparties sur plusieurs composants électroniques (6, 8) **caractérisé en ce que** la fonction maitre ne peut être définie ou déterminée que pendant le démarrage du dispositif de commande.

2. Dispositif de surveillance et de commande selon la revendication 1, **caractérisé en ce que** la définition de la fonction maitre peut être modifiée aussi pendant l'opération de ladite unité de porte (2).

3. Dispositif de surveillance et de commande selon l'une des revendications 1 ou 2, **caractérisé en ce que** les composants électroniques (6, 8) comprennent un élément de communication (16) compatible avec l'internet et/ou la communication mobile.

4. Dispositif de surveillance et de commande selon la revendication 3, **caractérisé en ce que** ledit élément de communication est un smartphone (16).

5. Dispositif de surveillance et de commande selon l'une des revendications 3 ou 4, **caractérisé en ce qu'**une unité de surveillance stationnaire est prévue qui est en liaison opérationnelle avec l'élément de communication (16).

6. Dispositif de surveillance et de commande selon l'une des revendications 3 à 5, **caractérisé en ce que** des paramètres de commande peuvent être récupérés via ledit élément de communication.

7. Dispositif de surveillance et de commande selon l'une des revendications 3 à 6, **caractérisé en ce que** des informations d'état et/ou de maintenance peuvent être récupérées via ledit élément de communication.

8. Dispositif de surveillance et de commande selon l'une quelconque des revendications précédentes, **caractérisé en ce que** les composants électroniques comprennent un élément d'affichage (12).

9. Dispositif de surveillance et de commande selon l'une quelconque des revendications précédentes, **caractérisé en ce qu'**un réseau Bluetooth (14) est utilisé comme réseau radio.

10. Dispositif de surveillance et de commande selon l'une des revendications 1 à 5, **caractérisé en ce qu'**un réseau sans fil est utilisé comme réseau radio.
